# EUROPEAN PATENT APPLICATION

(11) **EP 2 034 632 A1**
(43) Date of publication of application: **11.03.2009**
(21) Application number: 07745266.2
(22) Date of filing: 14.06.2007
(51) Int. Cl.: H04B 7/26, H04J 11/00, H04Q 7/36

(54) **MOBILE STATION DEVICE, BASE STATION DEVICE, AND METHOD FOR SYNCHRONIZATION BETWEEN UPLINK USERS**

(30) Priority: 19.06.2006 JP 2006169456
(71) Applicant: NTT DoCoMo, Inc., Chiyoda-ku Tokyo 100-6150 (JP)
(72) Inventor: KISHIYAMA, Yoshihisa, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/062009
(87) International publication number: WO 2007/148599

(57) **Abstract**

A base station determines transmission intervals at which a mobile station transmits a channel to be used to maintain synchronization and a radio resource that is to transmit the channel to be used to maintain synchronization, in accordance with information indicating a state of the mobile station transmitted from the mobile station in order to maintain synchronization with a plurality of the mobile stations connecting to the base station; the mobile station generates the channel to be used to maintain synchronization; the mobile station carries out transmission control of the channel to be used to maintain synchronization in accordance with the transmission intervals and the radio resource; the base station carries out a correlation detection in accordance with the channel to be used to maintain synchronization that is transmitted from the mobile station in accordance with the transmission intervals and the radio resource, and feeds back delay information to the corresponding mobile stations; and the mobile station maintains synchronization in accordance with the delay information transmitted from the base station.

## Description

### TECHNICAL FIELD

The present invention relates to a mobile station, a base station, and an uplink synchronization method between users in a mobile communications system where single carrier Orthogonal Frequency Division Multiplexing (OFDM) is applied as an uplink radio access method.

### BACKGROUND ART

In a next generation mobile communications system, a single carrier FDMA is under consideration as an uplink radio access method (see 3GPP TR25.814).

Moreover, packets are required to be orthogonal with each other in the frequency domain.

### SUMMARY OF INVENTION

### PROBLEM TO BE SOLVED BY THE INVENTION

However, the above related art has a following problem.

While synchronization between data transmitted from each mobile station is not required at a base station in W-CDMA, it is prerequisite to synchronize between plural mobile stations connecting to the same cell (base station) in uplink transmission in the next generation mobile communications system.

When the mobile station is transmitting data, the base station can synchronize in accordance with the data transmitted. However, in a time period during which the mobile station is not transmitting any data, the base station cannot synchronize between plural users connecting to the base station.

When synchronization is off, resynchronization is required at the time of resuming the communications, which leads to delay.

The present invention has been made in order to solve at least one of the above problems, and is directed to a mobile station, a base station, and an inter-mobile station uplink synchronization method that are capable of establishing synchronization during a time period, excluded from data transmission time, during which uplink transmission data are not being transmitted.

### MEANS FOR SOLVING THE PROBLEM

In order to achieve the above objective, one aspect of the present invention provides a mobile station in a mobile communications system wherein a single carrier OFDM is applied as an uplink radio access method, and information indicating transmission intervals of a channel to be used to maintain synchronization and a radio resource that is to transmit the channel to be used to maintain synchronization is transmitted from a base station in a time period during which no data are transmitted but synchronization with the base station is required, the mobile station comprising: a generation portion that generates the channel to be used to maintain synchronization; and a control portion that controls transmission of the channel to be used to maintain synchronization in accordance with the transmission intervals and the radio resource and maintains synchronization in accordance with delay information transmitted from the base station.

With this, the channel to be used to maintain synchronization can be transmitted in a time period during which no data are transmitted but synchronization needs to be maintained with the base station.

Another aspect of the present invention provides a base station in a mobile communications system wherein a single carrier OFDM is applied as an uplink radio access method, the base station comprising: a scheduling portion that determines transmission intervals at which a mobile station transmits a channel to be used to maintain synchronization and a radio resource that is to transmit the channel to be used to maintain synchronization, in accordance with information indicating a state of the mobile station transmitted from the mobile station in order to maintain synchronization with a plurality of the mobile stations connecting to the base station; and a correlation detection portion that carries out a correlation detection in accordance with the channel to be used to maintain synchronization transmitted in accordance with the transmission intervals and the radio resource, and feeds back delay information to corresponding mobile stations.

With such a configuration, the transmission intervals at which the channel to be used to maintain synchronization is transmitted and the radio resource that transmits the channel to be used to maintain synchronization can be determined in accordance with the information indicating the state of the mobile station transmitted from the mobile station in order to maintain synchronization between the base station and the plural mobile stations connecting to the base station.

Another aspect of the present invention provides an inter-user uplink synchronization method in a mobile communications system wherein a single carrier OFDM is applied as an uplink radio access method, the method comprising: a scheduling step, wherein a base station determines transmission intervals at which a mobile station transmits a channel to be used to maintain synchronization and a radio resource that is to transmit the channel to be used to maintain synchronization, in accordance with information indicating a state of the mobile station transmitted from the mobile station and/of information indicating quality of service (referred to as QoS below) in order to maintain synchronization with a plurality of the mobile stations connecting to the base station; a generation step, wherein the mobile station generates the channel to be used to maintain synchronization; a transmission control step, wherein the mobile station carries out transmission control of the channel to be used to maintain synchronization in accordance with the transmission intervals and the radio resource; a correlation detection step, wherein the base station carries out a correlation detection in accordance with the channel to be used to maintain synchronization that is transmitted from the mobile station in accordance with the transmission intervals and the radio resource, and feeds back delay information to the corresponding mobile stations; and a synchronization maintaining step, wherein the mobile station maintains synchronization in accordance with the delay information transmitted form the base station.

With this, the mobile station can transmit the channel to be used to maintain synchronization in a time period during which no data are transmitted but synchronization between the base station should be maintained, and the base station can determine the transmission intervals at which the mobile station transmits the channel to be used to maintain synchronization in order to maintain synchronization between the plural mobile stations connecting to the base station and the radio resource that transmits the channel to be used to maintain synchronization, in accordance with the information indicating the state of the mobile station and/or QoS, the information having been transmitted from the mobile station.

### ADVANTAGE OF THE INVENTION

According to an example of the present invention, there are provided a mobile station, a base station, and an uplink synchronization method between mobile stations that are capable of establishing synchronization even when uplink transmission data are not transmitted.

### BRIEF DESCRIPTION OF THE DRAWINGS

FIG. 1 is an explanatory view showing inter-user uplink synchronization.
FIG. 2 is a partial block diagram showing a base station according to an example of the present invention.

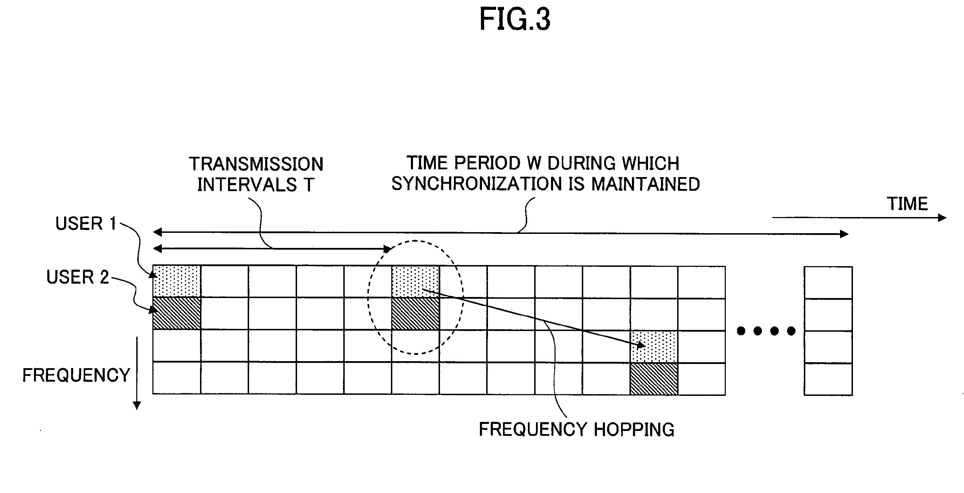

FIG. 3 is an explanatory view showing transmission intervals and radio resource allocation, according to an example of the present invention.
FIG. 4 is a partial block diagram showing a mobile station according to an example of the present invention.
FIG. 5 is a flow chart showing operations of a mobile communications system according to an example of the invention.

### LIST OF REFERENCE SYMBOLS

- 100:: base station
- 200:: mobile station

### BEST MODE FOR CARRYING OUT THE INVENTION

Referring to the accompanying drawings, examples of the present invention will be described. In all of the drawings for explaining the examples, like numerals are used for elements having like functions, and repetitive explanation is omitted.

A mobile communications system according to an example of the present invention is described.

The mobile communications system according to this example is provided with a base station 100, and a mobile station 200 that can perform radio communications with the base station 100.

In the mobile communications system according to this example, synchronization between the base station 100 and the plural users connecting to the base station 100 is maintained even in a time period excluded from data transmission periods.

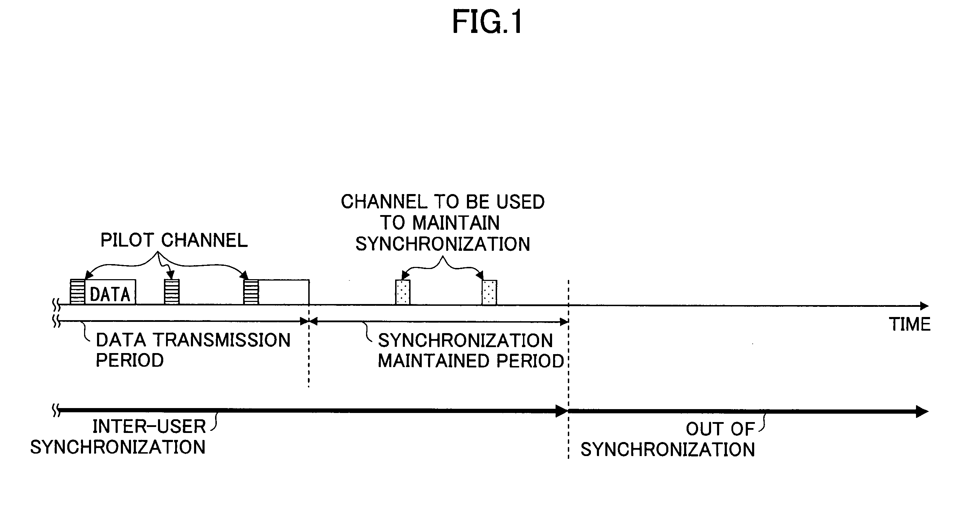

Specifically, the mobile station 200 transmits a channel to be used to maintain synchronization during a time period during which data are not being transmitted but the synchronization should be maintained, as shown in FIG. 1. The base station 100 can conduct synchronization with the mobile station 200 during the time period during which data are not being transmitted, in accordance with the channel to be used to maintain the synchronization transmitted from the mobile station 200. When the synchronization is off, resynchronization is required when resuming the data transmission, which causes delay. However, because the synchronization is maintained with the mobile station 200 during the time period excluded from the data transmission periods, transition can be made from a non data transmission state to a data transmission state without delay.

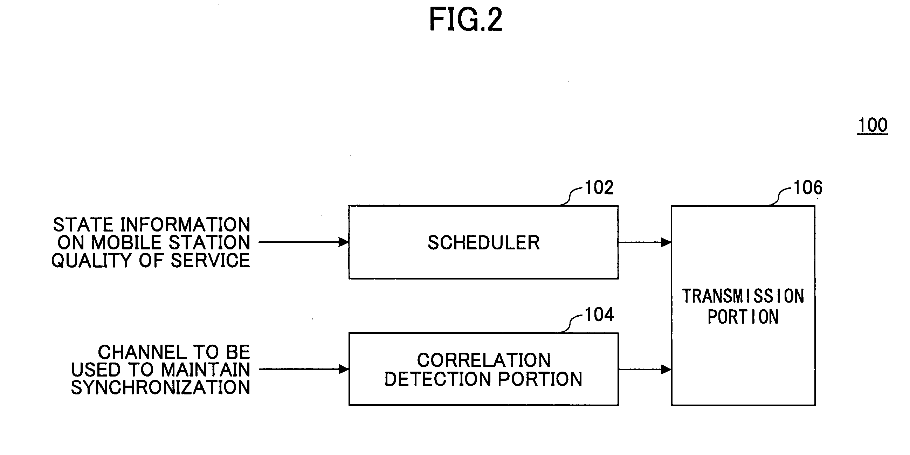

Next, referring to FIG. 2, the base station 100 according to this example is described.

The base station 100 according to this example is provided with a scheduler that inputs information indicating a state of the mobile station 200 (referred to as mobile station state information below) and/or QoS that is transmitted from the same mobile station 200, a correlation detection portion 104 that inputs the channel to be used to maintain synchronization transmitted from the mobile station 200, and a transmission portion 106.

The scheduler 102 carries out scheduling in accordance with the mobile station state information and/or QoS transmitted from the mobile station 200, determines transmission intervals of the channel to be used to maintain synchronization and a frequency resource, and outputs the same to the transmission portion 206. Namely, opportunities are given when each user transmits periodically at transmission intervals T the channel to be used to maintain synchronization by using a time/frequency resource determined in advance.

For example, the scheduler 102 determines the transmission intervals T and at least one of radio resources that transmit the channel to be used to maintain synchronization, in a time period W when the synchronization is maintained, which is determined in advance for the system. The radio resources are, for example, plural divided bandwidths into which a system bandwidth is divided, i.e., frequency blocks. The time period W when the synchronization is maintained and the transmission intervals T may be uniquely determined in advance with respect to the system, or differently determined per cell. When different cells have different time periods W and transmission intervals T, those values are reported through a broadcast channel in advance.

Specifically, the scheduler 102 sets the transmission intervals T to be a small value, for example, when determining that the mobile station 200 moves at high speed and thus the synchronization can easily be off, in accordance with the mobile station state information transmitted from each mobile station 200, e.g., mobility.

In addition, the scheduler 102 may determine in accordance with the mobile station state information, for example, a frequency error between the base station 100 and the mobile station 200 that the synchronization can be easily off when the frequency error is large, and thus set the transmission intervals T to be a small value.

Moreover, the scheduler 102 may control the time period during which the synchronization is maintained, depending on a type of communications by the mobile station 200. For example, a waiting time period for, e.g., a key input operation in a game and the like, which is no data transmission period, is required to be long. In this case, the time period during which the synchronization is maintained may be set longer.

The scheduler 102 may allocate different radio resources by frequency hopping at the transmission intervals T as the minimum unit.

The scheduler 102 may carry out scheduling by time division multiplexing (TDM) or code division multiplexing (CDM) so that plural mobile stations are multiplexed, rather than by frequency division multiplexing (FDM).

Furthermore, the scheduler 102 may carry out scheduling by a combination of at least two of FDM, TDM, and CDM so that plural mobile stations are multiplexed.

The transmission portion 106 transmits the transmission intervals input from the scheduler 102 and information indicating the radio resource to corresponding mobile stations 200, namely, each mobile station 200 that has transmitted the channel to be used to maintain synchronization.

The correlation detection portion 104 estimates the timing by carrying out correlation detection between the channel to be used for synchronization transmitted from each mobile station 200 and a replica signal of a reception signal sequence, determines a delay time τ, and outputs the same to the transmission portion 106.

The transmission portion 106 transmits the delay time τ input from the correlation detection portion 104 to the corresponding mobile station 200.

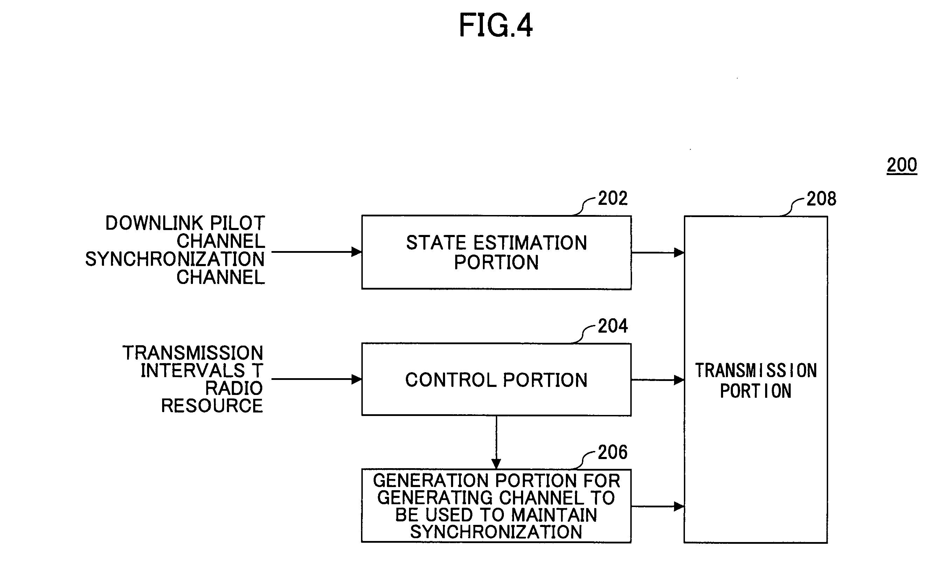

Next, referring to FIG. 4, a mobile station 200 according to an example of the present invention is described.

The mobile station 200 according to this example is provided with a state estimation portion 202 that inputs a pilot channel and/or a synchronization channel in a downlink that are transmitted from the base station 100; a control portion 204 that inputs the information indicating the transmission intervals T and the radio resource, the information being transmitted from the base station 100; a channel generation portion 206 that generates the channel to be used to maintain synchronization; and a transmission portion 208.

The downlink pilot and synchronization channels are input to the state estimation portion 202.

The state estimation portion 202 measures a state of the mobile station 200, for example, the mobility, the frequency error between the base station and the mobile station, e.g., a synthesizer frequency error, and outputs the measured information indicating the state of the mobile station 200 to the transmission portion 208. The transmission portion 208 transmits the input information indicating the state of the mobile station 200 to the base station 200. In addition, the state estimation portion 202 may generate QoS required between the base station 100 and the mobile station 200, and transmit the same to the base station 100.

When transmitting the channel to be used to maintain synchronization through a non-contention-based channel described later, the state estimation portion 202 is not required to report the state of the mobile station 200 and/or the QoS to the base station 100. In this case, the mobile station 200 independently determines to transmit the channel to be used to maintain synchronization. In this case, the mobile station 200 may transmit the channel at lengthened transmission intervals T.

The information indicating the radio resource that transmits the channel to be used to maintain synchronization and the transmission intervals T, which has been transmitted from the base station 100, is input to the control portion 204.

After receiving the information indicating the radio resource that transmits the channel to be used to maintain synchronization and the transmission intervals T, the control portion 204 instructs the channel generation portion 206 that generates the channel to be used to maintain synchronization to generate the channel to be used to maintain synchronization.

The channel generation portion 206 that generates the channel to be used to maintain synchronization generates the channel to be used to maintain synchronization in accordance with the instruction by the control portion 204. For example, the channel generation portion 206 that generates the channel to be used to maintain synchronization generates, for example, a contention-based channel including a user ID, for example, a synchronous/non-synchronous random access channel. With this, the radio resources can be saved. In addition, the channel generation portion 206 that generates the channel to be used to maintain synchronization may generate a non-contention-based channel including a user ID, for example, an (uplink) pilot channel, or an L1/L2 control channel. With this, reliability can be improved.

In addition, the channel generation portion 206 that generates the channel to be used to maintain synchronization may generate the contention-based channel including a user ID or the non-contention-based channel including a user ID, in accordance with a period determined in advance having the transmission intervals T as the minimum unit.

Moreover, the channel generation portion 206 that generates the channel to be used to maintain synchronization may generate the contention-based channel including a user ID or the non-contention-based channel including a user ID, in accordance with the QoS. For example, the non-contention-based channel may be generated for a high QoS user.

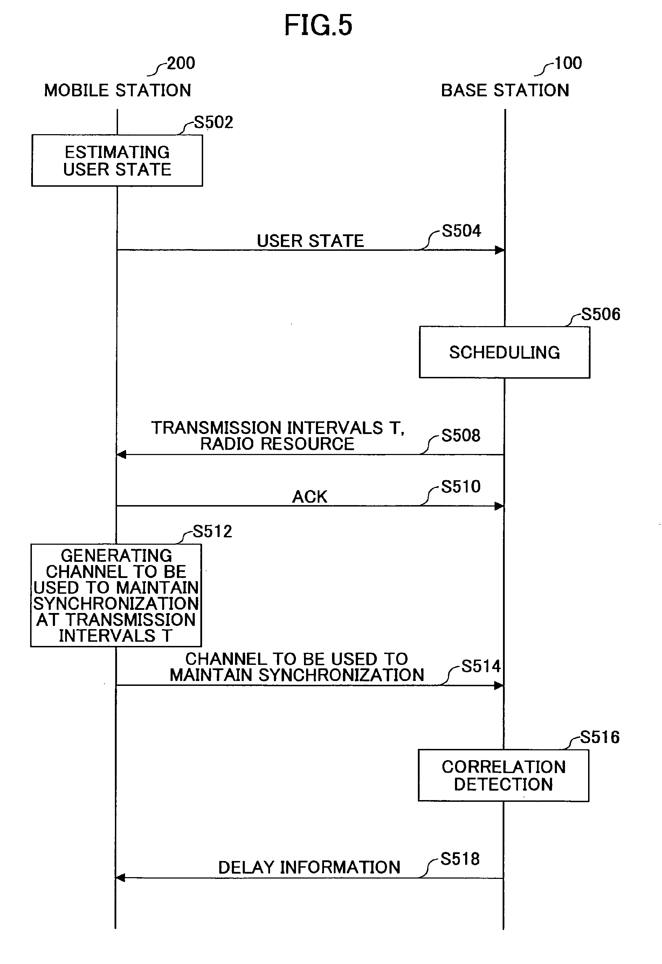

Next, operations of a mobile communications system according to this example are described in reference to FIG. 5.

The state estimation portion 202 of the mobile station 200 estimates the state of the mobile station and/or the QoS (step S502) and transmits the same to the base station 100 (step S504).

The base station 100 carries out scheduling in accordance with the state of the mobile station 200 and/or the QoS, which have been transmitted from the mobile station 200, and transmits the information indicating the transmission intervals T of the channel to be used to maintain synchronization and the radio resource that transmits the channel to be used to maintain synchronization to the mobile station 200 (step S508).

The mobile station 200 feeds back an ACK regarding the information indicating the transmission intervals T of the channel to be used to maintain transmission and the radio resource that transmits the channel to be used to maintain synchronization, which have been transmitted from the base station 100 (step S510).

The channel generation portion 206 that generates the channel to be used to maintain synchronization generates the channel to be used to maintain synchronization at the transmission intervals T (step S512). The transmission portion 208 transmits the channel to be used to maintain synchronization that is generated by the channel generation portion 206 that generates the channel to be used to maintain synchronization, through the specified radio resource at the transmission intervals T under control of the control portion 204 (step S514).

The correlation detection portion 104 of the base station 100 carries out the correlation detection between a reception signal sequence and a replica signal to estimate the timing, and detects a delay time τ (step S516). The correlation detection portion 204 feeds back the delay time τ to the mobile station 200 (step S518). In addition, the correlation detection portion 104 may obtain difference of a delay time up to this time from the delay time τ and report the difference as delay information to the mobile station 200. With this, an amount of information to be reported can be decreased.

### INDUSTRIAL APPLICABILITY

A mobile station, a base station, and an inter-user uplink synchronization method are applicable to a mobile communications system.

This international application claims the benefit of the priority date of Japanese Patent Application No. 2006-169456 filed on June 19, 2006, the entire content of which is herein incorporated hereby by reference.

## Claims

1. A mobile station in a mobile communications system wherein a single carrier OFDM is applied as an uplink radio access method, and information indicating transmission intervals of a channel to be used to maintain synchronization and a radio resource that is to transmit the channel to be used to maintain synchronization is transmitted from a base station in a time period during which no data are transmitted but synchronization with the base station is required, the mobile station comprising:
a generation portion that generates the channel to be used to maintain synchronization; and
a control portion that controls transmission of the channel to be used to maintain synchronization in accordance with the transmission intervals and the radio resource and maintains synchronization in accordance with delay information transmitted from the base station.

2. The mobile station of claim 1, further comprising:
a state estimation portion that estimates a state of the mobile station in accordance with a pilot channel and/or a synchronization channel in downlink; and
a transmission portion that transmits the state of the mobile station,
wherein the control portion transmits the channel to be used to maintain synchronization in accordance with the information indicating the transmission intervals and the radio resource that are determined by scheduling in accordance with the state of the mobile station.

3. The mobile station of claim 1, further comprising a QoS information generation portion that generates information indicating quality of service as a state of the mobile station,
wherein the control portion transmits the channel to be used to maintain synchronization in accordance with the information indicating the transmission intervals and the radio resource that are determined by scheduling in accordance with the information indicating the quality of service.

4. The mobile station of claim 1, further comprising a transmission portion that transmits the channel to be used to maintain synchronization through one of a non-contention-based channel for which allocation is carried out in advance and a contention-based channel.

5. The mobile station of claim 1, wherein an uplink pilot channel is used as the channel to be used to maintain synchronization.

6. The mobile station of claim 1, wherein a random access channel is used as the channel to be used to maintain synchronization.

7. A base station in a mobile communications system wherein a single carrier OFDM is applied as an uplink radio access method, the base station comprising:
a scheduling portion that determines transmission intervals at which a mobile station transmits a channel to be used to maintain synchronization and a radio resource that is to transmit the channel to be used to maintain synchronization, in accordance with information indicating a state of the mobile station transmitted from the mobile station in order to maintain synchronization with a plurality of the mobile stations connecting to the base station; and
a correlation detection portion that carries out a correlation detection in accordance with the channel to be used to maintain synchronization transmitted in accordance with the transmission intervals and the radio resource, and feeds back delay information to corresponding mobile stations.

8. The base station of claim 7, wherein the scheduling portion determines the transmission intervals and the radio resource in accordance with the information indicating the state of the mobile station and/or information indicating quality of service.

9. The base station of claim 7, wherein the scheduling portion carries out scheduling so that the plural mobile stations are multiplexed by any one of frequency division multiplexing, time division multiplexing, and code division multiplexing, or a combination thereof.

10. The base station of claim 7, wherein an uplink pilot channel is used as the channel to be used to maintain synchronization.

11. The base station of claim 7, wherein a random access channel is used as the channel to be used to maintain synchronization.

12. An inter-user uplink synchronization method in a mobile communications system wherein a single carrier OFDM is applied as an uplink radio access method, the method comprising:
a scheduling step, wherein a base station determines transmission intervals at which a mobile station transmits a channel to be used to maintain synchronization and a radio resource that is to transmit the channel to be used to maintain synchronization, in accordance with information indicating a state of the mobile station transmitted from the mobile station and/or information indicating quality of service in order to maintain synchronization with a plurality of the mobile stations connecting to the base station;
a generation step, wherein the mobile station generates the channel to be used to maintain synchronization;
a transmission control step, wherein the mobile station carries out transmission control of the channel to be used to maintain synchronization in accordance with the transmission intervals and the radio resource;
a correlation detection step, wherein the base station carries out a correlation detection in accordance with the channel to be used to maintain synchronization that is transmitted from the mobile station in accordance with the transmission intervals and the radio resource, and feeds back delay information to the corresponding mobile stations; and
a synchronization maintaining step, wherein the mobile station maintains synchronization in accordance with the delay information transmitted from the base station.

13. The inter-user uplink synchronization method of claim 12, wherein an uplink pilot channel is used as the channel to be used to maintain synchronization.

14. The inter-user uplink synchronization method of claim 12, wherein a random access channel is used as the channel to be used to maintain synchronization.
